# EUROPÄISCHE PATENTSCHRIFT

(11) **EP 1 323 670 B1**
(45) Veröffentlichungstag und Bekanntmachung des Hinweises auf die Patenterteilung: **08.07.2009**
(21) Anmeldenummer: 02406078.2
(22) Anmeldetag: 09.12.2002
(51) Int. Cl.: C01B 31/00, C01B 31/04, C09K 21/02

(54) **Expandierbare Graphit-Intercalationsverbindungen, Verfahren zu ihrer Hestellung und ihrer Verwendung**
Expandable graphite intercalation compounds, process for their preparation and their use
Composés d'intercalation du graphite expansibles, leur procédé de préparation et leur utilisation

(30) Priorität: 19.12.2001 DE 10162532
(43) Veröffentlichungstag der Anmeldung: 02.07.2003
(73) Patentinhaber: HILTI Aktiengesellschaft, 9494 Schaan (LI)
(72) Erfinder: Wenzel, Antje, 82237 Wörthsee (DE); Reinheimer, Arne, 87668 Zellerberg (DE)
(74) Vertreter: Wildi, Roland

(56) Entgegenhaltungen:
- GB-A- 2 001 662
- US-A- 3 880 944
- US-A- 3 925 495
- US-A- 3 984 352
- US-A- 4 035 434
- US-A- 4 083 885
- US-A- 4 119 655
- US-A- 4 202 986

## Beschreibung

Gegenstand der Erfindung sind expandierbare Graphit-Intercalationsverbindungen mit steuerbarer Onset-Temperatur, Verfahren zu ihrer Herstellung und ihre Verwendung als intumeszierendes Brandschutzadditiv für die Herstellung von Flammschutz-Zusammensetzungen, insbesondere intumeszierenden Massen für Brandschutz-Abdichtungen von Durchbrüchen, Durchführungen und sonstigen Öffnungen in Wänden, Böden und/oder Decken von Gebäuden.

Expandierbare Graphit-Intercalationsverbindungen sind auch als Blähgraphit bekannt und im Handel erhältlich. Es handelt sich dabei um Verbindungen, die zwischen den Gitterschichten des Graphits eingelagerte Fremdbestandteile (Intercalate) enthalten. Solche expandierbaren Graphit-Intercalationsverbindungen werden üblicherweise dadurch hergestellt, daß man Graphitteilchen in einer Lösung dispergiert, die ein Oxidationsmittel und die einzulagernde Gastverbindung enthält. Üblicherweise angewandte Oxidationsmittel sind Salpetersäure, Kaliumchlorat, Chromsäure, Kaliumpermanganat und dergleichen. Als einzulagernde Verbindung wird beispielsweise konzentrierte Schwefelsäure verwendet, wobei die Umsetzung bei Temperaturen von 60°C bis 130°C während bis zu vier Stunden erfolgt (siehe beispielsweise EP-B-0 085 121). Alternativ dazu ist es auch möglich, Metallchloride in Gegenwart von beispielsweise Chlorgas in den Graphit einzulagern (E. Stumpp, Physica (1981), 9-16).

Die expandierbaren Graphit-Intercalationsverbindungen oder Blähgraphite unterliegen beim Erhitzen auf eine Temperatur oberhalb der sogenannten Onset-Temperatur einer starken Volumenzunahme mit Expansionsfaktoren von mehr als 200, die dadurch verursacht wird, daß die in die Schichtstruktur des Graphits eingelagerten Intercalationsverbindungen durch das schnelle Erhitzen auf diese Temperatur unter Bildung gasförmiger Stoffe zersetzt werden, wodurch die Graphitpartikel senkrecht zu der Schichtebene expandiert oder aufgebläht werden (EP-B-0 085 121). Dieses Expansionsverhalten wird in intumeszierenden Massen ausgenützt, die beispielsweise zur Brandschutz-Abdichtung von Kabel- und Rohr-Durchführungen durch Wände und Decken von Gebäuden eingesetzt werden. Im Brandfall erfolgt nach Erreichen der Onset-Temperatur eine Ausdehung der Graphitteilchen und damit der die Durchführung abdichtenden intumeszierenden Masse, so daß auch nach dem Abbrennen der durch die Durchführung geführten Kabel und/oder Kunststoffrohre der Durchbruch des Feuers durch die Durchführung verhindert beziehungsweise verzögert wird.

Die Onset-Temperatur ist als die Temperatur definiert, bei der der thermische Expansionsprozess des intumeszierenden Systems, also hier der expandierbaren Graphit-Intercalationsverbindung, beginnt, das heißt die Temperatur zu Beginn des Expansionsvorganges. Die herkömmlichen und im Handel erhältlichen Blähgraphittypen verfügen lediglich über sehr eingeschränkte Onset-Temperaturen von ca. 150°C, ca. 160°C und ca. 200°C. Um hinsichtlich des Intumeszenzverhaltens flexibel auf spezielle Produktanforderungen für die Herstellung von Brandschutz-Massen reagieren zu können, sind expandierbare Graphit-Intercalationsverbindungen erwünscht, die eine höhere Variationsbreite bezüglich ihrer Onset-Temperatur besitzen.

Die der vorliegenden Erfindung zugrunde liegende Aufgabe besteht also darin, expandierbare Graphit-Intercalationsverbindungen zu schaffen, deren Onset-Temperaturen gezielt innerhalb eines breiten Bereiches eingestellt werden können.

Es hat sich überraschenderweise gezeigt, daß es durch die Co-Intercalation von intercalierbaren Lewissäuren, die auch als Akzeptoren bezeichnet werden, und intercalierbaren organischen Verbindungen, die auch als Lewisbasen oder Donoren bezeichnet werden, das heißt durch Einführen sowohl einer intercalierbaren Lewissäure als auch einer organischen Verbindung möglich wird, in Abhängigkeit von den in den Graphit eingelagerten Intercalationsverbindungen gezielt Onset-Temperaturen im Bereich von 44°C bis 233°C zu erreichen beziehungsweise einzustellen.

Die obige Aufgabe wird daher gelöst durch die expandierbaren Graphit-Intercalationsverbindungen gemäß Anspruch 1. Die Unteransprüche betreffen bevorzugte Ausführungsformen dieses Erfindungsgegenstandes, Verfahren zur Herstellung dieser Graphit-Intercalationsverbindungen und deren Verwendung.

Gegenstand der Erfindung sind daher expandierbare Graphit-Intercalationsverbindungen mit steuerbarer Onset-Temperatur, die dadurch gekennzeichnet sind, daß sie als Intercalationsbestandteile mindestens eine intercalierbare Lewissäure, die gegebenenfalls in Kombination mit dem(den) bei der Herstellung verwendeten Lösungsmittel(n), insbesondere Nitromethan, vorliegt, und mindestens eine organische Verbindung enthalten. Über die Art dieser Intercalate, namentlich der organischen Verbindung, kann erfindungsgemäß die Onset-Temperatur gesteuert werden.

Erfindungsgemäß wird als intercalierbare Lewissäure vorzugsweise ein Metallhalogenid, insbesondere ein Metallchlorid, eingesetzt wie AlCl₃, SbCl₅, ZnCl₂, YCl₃, CrCl₃, NiCl₂ und/oder FeCl₃.

Als organische Verbindung enthalten die verbindungsgemäßen Graphit-Intercalationsverbindungen vorzugsweise Verbindungen aus der Carbonsäurehalogenide, Dicarbonsäuredihalogenide, Alkylhalogenide, Arylhalogenide, Alkylarylhalogenide, Arylalkylhalogenide, aliphatische oder aromatische Alkohole, Dialkylether, Diarylether, Arylalkylether, aliphatische oder aromatische Glykolether, Carbonsäureester, Dicarbonsäureester, Alkene, 1,3-Diketone und organische Komplexbildner umfassenden Gruppe.

Erfindungsgemäß bevorzugte Carbonsäurehalogenide entsprechen der allgemeinen Formel (I): 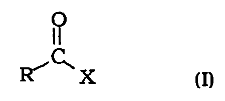 in der R Wasserstoff oder eine Alkyl-, Alkenyl-, Aryl-, Arylalkyl- oder Alkylarylgruppe mit 1 bis 30, vorzugsweise 1 bis 18 C-Atomen und X ein Halogenatom, vorzugsweise ein Chloratom oder ein Bromatom bedeuten. Besonders bevorzugte Carbonsäurehalogenide sind Acetylchlorid, Hexanoylchlorid, Octanoylchlorid, Palmitoylchlorid, Benzoylchlorid, Phenylacetylchlorid, 3-Phenylpropionylchlorid und Pivalinsäurechlorid.

Erfindungsgemäß bevorzugte Dicarbonsäuredihalogenide entsprechen der allgemeinen Formel (II): 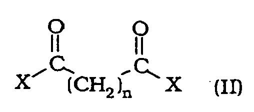 in der n eine ganze Zahl mit einem Wert von 1 bis 30, vorzugsweise 1 bis 18 und X ein Halogenatom, vorzugsweise ein Chloratom oder ein Bromatom bedeuten. Erfindungsgemäß besonders bevorzugte Dicarbonsäuredihalogenide sind Oxalylchlorid, Malonsäuredichlorid, Bernsteinsäuredichlorid, Glutarsäuredichlorid und Adipinsäuredichlorid.

Die Graphit-Intercalationsverbindungen der Erfindung enthalten als Alkylhalogenide, Arylhalogenide, Arylalkylhalogenide oder Alkylarylhalogenide vorzugsweise Verbindungen der allgemeinen Formel (III):

R-X (III)

in der R eine Alkyl-, Alkenyl-, Aryl-, Arylalkyl- oder Alkylarylgruppe mit 1 bis 30, vorzugsweise 1 bis 18 C-Atomen und X ein Halogenatom, vorzugsweise ein Chloratom oder ein Bromatom bedeuten. Bevorzugte Vertreter dieser Halogenverbindungen sind Phenylchloroformiat, 2-Phenoxyethylchlorid und 2-Phenylethylchlorid.

Gemäß einer weiteren bevorzugten Ausführungsform enthalten die erfindungsgemäßen Graphit-Intercalationsverbindungen als aliphatischen und aromatischen Alkohol eine Verbindung der allgemeinen Forme (IV):

R-OH (IV)

in der R eine Alkyl-, Alkenyl-, Aryl-, Arylalkyl- oder Alkylarylgruppe mit 1 bis 30, vorzugsweise 1 bis 18 C-Atomen bedeutet. Erfindungsgemäß besonders bevorzugte Alkohole sind Methanol, Ethanol, 1,3-Propandiol, 1,4-Butandiol und Benzylalkohol.

Erfindungsgemäß bevorzugte Dialkylether oder Diarylether entsprechen der allgemeinen Formel (V): 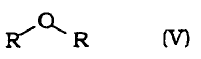 in der R unabhängig voneinander Alkyl-, Alkenyl-, Aryl-, Arylalkyl- oder Alkylarylgruppen mit 1 bis 30, vorzugsweise 1 bis 18 C-Atomen bedeuten. Bevorzugte Vertreter dieser Gruppe sind Diethylether und Diphenylether.

Gemäß einer weiteren bevorzugten Ausführungsform der Erfindung enthalten die Graphit-Intercalationsverbindungen als organische Verbindung aliphatische und aromatische Glykolether der allgemeinen Formel (VI): 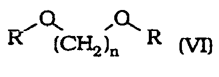 in der n eine ganze Zahl mit einem Wert von 1 bis 30, vorzugsweise 1 bis 18 und R unabhängig voneinander Alkyl-, Alkenyl-, Aryl-, Arylalkyl- oder Alkylarylgruppen mit 1 bis 30, vorzugsweise 1 bis 18 C-Atomen bedeuten. Ein besonders bevorzugter Vertreter dieser Gruppe ist Ethylenglykoldimethylether.

Als Carbonsäureester sind erfindungsgemäß Verbindungen der allgemeinen Formel (VII) bevorzugt: 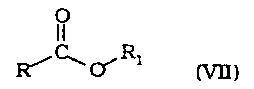 in der R Wasserstoff oder eine Alkyl-, Alkenyl-, Aryl-, Arylalkyl- oder Alkylarylgruppe mit 1 bis 30, vorzugsweise 1 bis 18 C-Atomen und R₁ eine Alkylgruppe mit 1 bis 8, vorzugsweise 1 bis 6 C-Atomen bedeuten. Ein besonders bevorzugter Vertreter dieser Gruppe ist Ethylacetat.

Weiterhin können erfindungsgemäß als organische Verbindung auch Dicarbonsäureester der Formel (VIII) in den Graphit eingelagert werden: 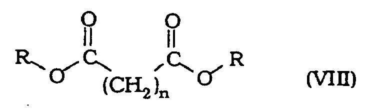 in der n eine ganze Zahl mit einem Wert von 1 bis 30, vorzugsweise 1 bis 18 und R unabhängig voneinander Alkyl-, Alkenyl-, Aryl-, Arylalkyl- oder Alkylarylgruppen mit 1 bis 30, vorzugsweise 1 bis 18 C-Atomen bedeuten.

Als Alkene sind insbesondere die Verbindungen der allgemeinen Formel (IX) bevorzugt: 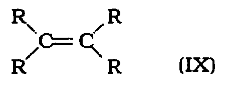 in der R unabhängig voneinander Wasserstoffatome, Alkyl-, Alkenyl-, Aryl-, Arylalkyl- oder Alkylarylgruppen mit 1 bis 30, vorzugsweise 1 bis 18 C-Atomen bedeuten, wobei erfindungsgemäß in bevorzugter Weise Styrol eingelagert wird.

Erfindungsgemäß bevorzugte 1,3-Diketone entsprechen der allgemeinen Formel (X): 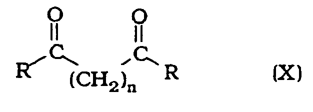 in der n eine ganze Zahl mit einem Wert von 1 bis 30, vorzugsweise 1 bis 18 und R unabhängig voneinander Alkyl-, Alkenyl-, Aryl-, Arylalkyl- oder Alkylarylgruppen mit 1 bis 30, vorzugsweise 1 bis 18 C-Atomen bedeuten.

Erfindungsgemäß werden als organische Komplexbildner vorzugsweise Ethylendiamintetraessigsäure, Nitrilomethanphosphonsäure, Pentanatriumtriphosphat und/oder Triethanolamin in die Graphitteilchen eingelagert.

Die in den obigen Gruppen R und R₁ angesprochenen Alkyl- und Alkenylgruppen enthalten 1 bis 30, vorzugsweise 1 bis 18 und noch bevorzugter 1 bis 8 Kohlenstoffatome. Die bevorzugten Arylgruppen sind Phenyl- und Naphtylgruppen, während die bevorzugte Arylalkylgruppe die Benzylgruppe ist.

Die Erfindung betrifft weiterhin Verfahren zur Herstellung der oben definierten Graphit-Intercalationsverbindungen durch Co-Intercalation der intercalierbaren Metallchloride und der organischen Verbindungen oder durch nachträgliche Intercalation der organischen Verbindungen in die durch Einlagern der intercalierbaren Lewissäure in den Graphit erhaltenen Zwischenprodukt-Intercalationsverbindungen.

Ein bevorzugtes Verfahren der Erfindung besteht darin, daß man Graphit und die intercalierbare Lewissäure im geschlossenen Rohr oder in einem dafür geeigneten Lösungsmittel umsetzt und dann die erhaltene Zwischenprodukt-Intercalationsverbindung aus Graphit und der Lewissäure, gegebenenfalls nach vorheriger Isolierung, Reinigung und Trocknung, mit der organischen Verbindung umsetzt und das Reaktionsprodukt isoliert, reinigt und trocknet.

Bei diesem Verfahren kann man die erste Stufe der Umsetzung des Graphits mit der intercalierbaren Lewissäure entweder im geschlossenen Rohr, das heißt nach dem Einschmelzen des Graphits und der intercalierbaren Lewissäure, in ein Quarzrohr umsetzen, oder aber in einem dafür geeigneten Lösungsmittel.

Wenngleich die Umsetzung in einem Lösungsmittel vorteilhaft ist, da sie bei niedrigeren Temperaturen durchgeführt werden kann als die Festkörperreaktion des Metallchlorids mit dem Graphit im abgeschmolzenen Quarzrohr, bestehen erhebliche Einschränkungen im Hinblick auf das zu verwendende Lösungsmittel, welches nämlich sowohl das Metallchlorid lösen als auch den Elektronen-Transfer zwischen dem Graphit und dem Metallchlorid direkt oder indirekt ermöglichen muß. Die hierfür einsetzbaren Lösungsmittel sind beispielsweise Nitroalkane der allgemeinen Formel CH₃(CH₂)ₙNO₂, worin n eine Zahl mit einem Wert von 0 bis 10 bedeutet, sowie deren Strukturisomere, insbesondere Nitromethan, Nitroethan, 1-Nitropropan, Tetrachlorkohlen-stoff und Thionylchlorid.

Im Fall der Verwendung von Lösungsmitteln sind diese Lösungsmittel in der erhaltenen Zwischenprodukt-Intercalationsverbindung aus Graphit und der Lewissäure enthalten. Dieses Zwischenprodukt kann gegebenenfalls isoliert, gereinigt und getrocknet werden, wobei die Reinigung beispielsweise dadurch erfolgt, daß man das Zwischenprodukt mit einem Lösungsmittel wäscht und dann trocknet.

Bei der Umsetzung von Graphit und der intercalierbaren Lewissäure im geschlossenen Rohr arbeitet man vorzugsweise bei einer Temperatur von 200°C bis 800°C, bevorzugter 250°C bis 600°C während einer Zeitdauer von drei Minuten bis 72 Stunden, vorzugsweise 10 bis 24 Stunden, insbesondere 12 bis 18 Stunden.

Im Anschluß daran wird die Zwischenprodukt-Intercalationsverbindung aus Graphit und der Lewissäure mit der organischen Verbindung umgesetzt, wobei die organische Verbindung entweder in flüssiger oder geschmolzener Form zur Reaktion gebracht wird oder aber in einem dafür geeigneten Lösungsmittel.

Gemäß einer weiteren Ausführungsform der Erfindung erfolgt die Intercalation der intercalierbaren Lewissäure und der organischen Verbindung gleichzeitig, also durch Co-Intercalation. Dieses Verfahren besteht darin, daß man Graphit, die intercalierbare Lewissäure und die organische Verbindung gleichzeitig entweder in der organischen Verbindung in flüssiger oder geschmolzener Form oder aber in einem für die Umsetzung geeigneten Lösungsmittel umsetzt. Das verwendete Lösungsmittel muß sowohl das Metallchlorid und die organische Verbindung lösen, als auch den Elektronentransfer zwischen dem Graphit und dem einzulagernden Metallchlorid und der organischen Verbindung ermöglichen.

Nach der Umsetzung wird das letztlich erhaltende Reaktionsprodukt in üblicher Weise isoliert und gereinigt, beispielsweise durch Waschen mit dem Lösungsmittel, und getrocknet.

Die erfindungsgemäße Intercalation der organischen Verbindung entweder in das zunächst erhaltene Intercalations-Zwischenprodukt, welches Graphit, die intercalierbare Lewissäure und gegebenenfalls ein Lösungsmittel, vorzugsweise Nitromethan, enthält, oder im Rahmen der Co-Intercalation erfolgt vorzugsweise durch Umsetzen der Reaktionsteilnehmer gegebenenfalls in einem Lösungsmittel bei einer Temperatur im Bereich von -10°C bis 100°C, vorzugsweise bei einer Temperatur von 10°C bis 50°C, namentlich bei Raumtemperatur, während einer Zeitdauer von drei Minuten bis 48 Stunden, vorzugsweise 30 Minuten bis 24 Stunden.

Bei der Umsetzung verwendet man die intercalierbare Lewissäure vorzugsweise in einer Menge von 0,02 bis 20 Mol, vorzugsweise 0,05 bis 10 Mol pro Mol Graphit, während die organische Verbindung in einer Menge von 0,75 bis 1000 Gew.-%, vorzugsweise 2 bis 800 Gew.-%, bezogen auf die Summe aus Graphit und Lewissäure beziehungsweise das Gewicht der Zwischenprodukt-Intercalationsverbindung aus Graphit und der Lewissäure und gegebenenfalls intercaliertem Lösungsmittel, vorzugsweise Nitromethan, eingesetzt wird.

Ein weiterer Gegenstand der Erfindung ist die Verwendung der oben beschriebenen Graphit-Intercalationsverbindung als Blähgraphit als intumeszierendes Brandschutzadditiv für die Herstellung von Flammschutz-Zusammensetzungen, insbesondere für die Herstellung von intumeszierenden Massen für die Brandschutz-Abdichtung von Durchbrüchen, Durchführungen und sonstigen Öffnungen in Wänden, Böden und/oder Decken von Gebäuden.

Die oben angesprochene und in den nachfolgenden Beispielen angegebene Onset-Temperatur der erfindungsgemäßen Graphit-Intercalationsverbindungen wird durch thermomechanische Analyse über die Dimensionsänderung des Materials in Abhängigkeit von der Temperatur gemessen. Hierzu wird eine Probe auf einen Probenträger aufgebracht, der mit einer Meßsonde versehen und in einen Ofen eingebracht wird, der unter Anwendung eines geeigneten Temperaturprogramms innerhalb eines vorher bestimmten Temperaturbereichs aufgeheizt wird. Die Meßsonde kann zusätzlich mit einer variablen Auflast beaufschlagt werden. Bei dieser Messung wird eine positive Dimensionsänderung als Expansion und eine negative Dimensionsänderung als Schrumpfung bezeichnet.

Zur Bestimmung der Expansion der erfindungsgemäßen Graphit-Intercalationsverbindungen wird die pulverförmige Probe in einen Korundtiegel eingebracht und mit einem Stahltiegel abgedeckt. Der Stahltiegel gewährleistet bei der Ausdehnung der Probe die ruckfreie Übertragung der Dimensionsänderung der Probe auf die Meßsonde. Diese Tiegelanordnung wird auf den Probenträger der thermomechanischen Analysevorrichtung aufgebracht und in den Ofen eingeführt.

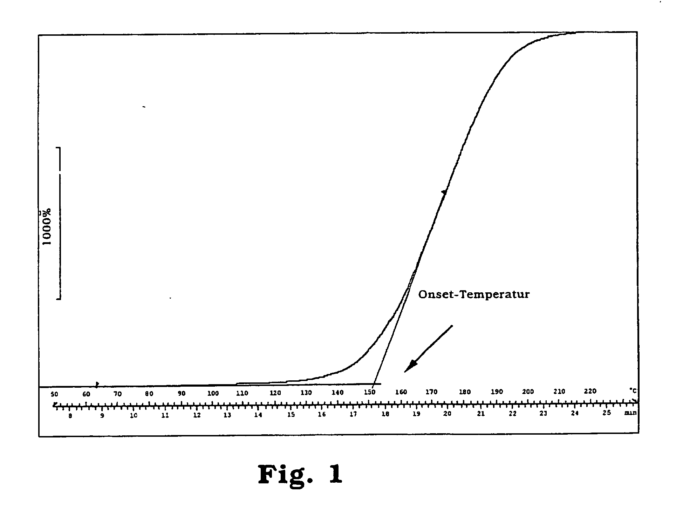

Als Ergebnis einer solchen thermomechanischen Analyse erhält man eine Kurve, wie sie in der **Figur 1** dargestellt ist, in der die prozentuale Expansion des Materials als lineare Verschiebung des Stahltiegels gegen die Temperatur aufgetragen ist.

Die Onset-Temperatur des intumeszierenden Materials ist mathematisch als Schnittpunkt der verlängerten Basislinie vor der Expansion der Probe und der Wendetangente der Expansionskurve definiert.

Bei dieser Bestimmung der Onset-Temperatur wurden die folgenden Bedingungen eingehalten:

| | |
|---|---|
| Temperaturprogramm | Dynamischer Modus (mit vorgeschalteter isothermer Phase während 5 Minuten bei 25°C) |
| Aufheizrate | 10°C /min |
| Temperaturbereich | 25°C bis 500°C (auch teilweise 25°C bis 1100°C) |
| Analysengas | Synthetische Luft |
| Flußrate | 50 ml /min |
| Auflast | 0,06 N |
| Probengefäß | 150 µl Korundtiegel + 150µl Stahltiegel (als Deckel) |

Die folgenden Beispiele dienen der weiteren Erläuterung der Erfindung.

### BEISPIEL 1

Herstellung der FeCl₃-Graphit-Zwischenprodukt-Intercalationsverbindung in Nitromethan (FeCl₃/CH₃NO₂ -Graphit)

Man löst in einem 100 ml Rundkolben 11,68 g (0,07 Mol) FeCl₃ in 15 ml Nitromethan. Anschließend gibt man 5 g (0,42 Mol) Graphit zu und rührt während 18 Stunden bei Raumtemperatur. Man wäscht das Material mit Nitromethan als Lösungsmittel, saugt ab und trocknet.

Das erhaltende Zwischenprodukt enthalt FeCl₃ und Nitromethan als Intercalate und besitzt eine Onset-Temperatur von 148°C.

### BEISPIEL 2

Herstellung der FeCl₃ -Graphit-Zwischenprodukt-Intercalationsverbindung durch Festkörperreaktion

Man vermischt 2,25 g (0.19 Mol) Graphit und 2,25 g (0.01 Mol) FeCl₃ und schmilzt die Mischung in einem Quarzglasrohr ein. Anschließend hält man die in dem Quarzglasrohr eingeschmolzene Reaktionsmischung während 17 Stunden bei 300°C. Nach dem Abkühlen wäscht man mit wenig Wasser, saugt ab und trocknet.

Die Onset-Temperatur dieses Zwischenprodukts beträgt 314°C.

### BEISPIEL 3

Intercalation einer organischen Verbindung in die FeCl₃/CH₃NO₂ - Graphit-Zwischenprodukt-Intercalationsverbindung

Man verrührt 1 g (84 mMol) der gemäß Beispiel 1 erhaltenen FeCl₃/CH₃NO₂ - Graphit-Zwischenprodukt-Intercalationsverbindung während 24 Stunden bei Raumtemperatur in 3 ml (0.03 Mol) Propionsäurechlorid. Anschließend saugt man das Material ab, wäscht mit wenig Diethylether und trocknet.

Die Onset-Temperatur des Produkts beträgt 132°C.

### BEISPIEL 4

Intercalation einer organischen Verbindung in die FeCl₃ -Graphit-Zwischenprodukt-Intercalationsverbindung

Man verrührt 0,5 g (42 mMol) der gemäß Beispiel 2 erhaltenen FeCl₃ -Graphit-Zwischenprodukt-Intercalationsverbindung in 3 ml (0.03 Mol) Propionsäurechlorid während 24 Stunden Raumtemperatur. Anschließend saugt man ab, wäscht mit wenig Diethylether und trocknet.

Die Onset-Temperatur des Materials beträgt 152°C.

### BEISPIEL 5

Man wiederholt die Verfahrensweise des Beispiels 3 unter Verwendung der FeCl₃/CH₃NO₂-Graphit-Zwischenprodukt-Intercalationsverbindung von Beispiel 1 und in der nachfolgenden Tabelle I angegebenen organischen Verbindungen und erhält Produkte mit den in der gleichen Tabelle angegebenen Onset-Temperaturen.

**Tabelle I**

| **organische Verbindung** | **Onset-Temperatur (°C)** |
|---|---|
| Oxalylchlorid | 44 |
| Malonsäuredichlorid | 114 |
| Bernsteinsäuredichlorid | 150 |
| Glutarsäuredichlorid | 133 |
| Adipinsäuredichlorid | 138 |
| Acetylchlorid | 114 |
| Propionylchlorid | 132 |
| Hexanoylchlorid | 154 |
| Octanoylchlorid | 156 |
| Palmitoylchlorid | 146 |
| Benzoylchlorid | 150 |
| Phenylacetylchlorid | 157 |
| 3-Phenylpropionylchlorid | 153 |
| Pivalinsäurechlorid | 150 |
| Acrylsäurechlorid | 156 |
| Methanol | 152 |
| Ethanol | 152 |
| 1,3-Propandiol | 152 |
| 1,4-Butandiol | 134 |
| Benzylalkohol | 129 |
| Phenylchloroformiat | 159 |
| 2-Phenoxyethylchlorid | 156 |
| 2-Phenylethylchlorid | 159 |
| Ethylacetat | 155 |
| Diethylether | 153 |
| Ethylenglycoldimethylether | 158 |
| Diphenylether | 156 |
| Styrol | 139 |
| Acetessigester | 140 |
| Acetylaceton | 154 |
| Benzoylaceton | 155 |
| EDTA | 156 |
| Nitrilotrimethanphosphonsäure | 155 |
| Penta-Natriumtriphosphat | 159 |
| Triethanolamin | 156 |

Aus Tabelle I ist ohne weiteres zu erkennen, daß man durch entsprechende Auswahl der eingesetzten organischen Verbindung die Onset-Temperatur der erhaltenen expandierbaren Graphit-Intercalationsverbindung gezielt im Bereich von 44°C bis 159°C steuern kann.

### BEISPIEL 6

Man wiederholt die Maßnahmen des Beispiels 4 unter Verwendung der FeCl₃-Graphit-Zwischenprodukt-Intercalationsverbindung von Beispiel 2 in der nachfolgenden Tabelle II angegebenen Verbindungen. In der Tabelle II sind auch die Onset-Temperaturen der erhaltenen Produkte aufgeführt.

**Tabelle II**

| **organische Verbindung** | **Onset-Temperatur (°C)** |
|---|---|
| Acetylchlorid | 172 |
| Hexanoylchlorid | 167 |
| Octanoylchlorid | 157 |
| Palmitoylchlorid | 144 |
| Benzoylchlorid | 147 |
| Phenylacetylchlorid | 118 |
| 3-Phenylpropionylchlorid | 137 |
| Pivalinsäurechlorid | 100 |
| Oxalylchlorid | 57 |
| Malonsäuredichlorid | 106 |
| Bernsteinsäuredichlorid | 173 |
| Glutarsäuredichlorid | 147 |
| Adipinsäuredichlorid | 146 |
| Methanol | 124 |
| Ethanol | 164 |
| 1,3-Propandiol | 171 |
| 1,4-Butandiol | 187 |
| Benzylalkohol | 159 |
| Phenylchloroformiat | 164 |
| 2-Phenoxyethylchlorid | 233 |
| 2-Phenylethylchlorid | 142 |
| Ethylacetat | 153 |
| Diethylether | 174 |
| Ethylenglycoldimethylether | 133 |
| Diphenylether | 150 |
| Acetessigester | 151 |
| Acetylaceton | 169 |
| Benzoylaceton | 158 |
| EDTA | 120 |
| Nitrilotrimethanphosphonsäure | 139 |
| Penta-Natriumtriphosphat | 205 |
| Triethanolamin | 164 |

Aus obiger Tabelle ist ohne weiteres zu erkennen, daß man durch entsprechende Auswahl der eingesetzten organischen Verbindung die Onset-Temperatur der erhaltenen expandierbaren Graphit-Intercalationsverbindung gezielt im Bereich von 57°C bis 233°C einstellen kann.

## Patentansprüche

1. Expandierbare Graphit-Intercalationsverbindungen mit steuerbarer Onset-Temperatur, **dadurch gekennzeichnet, daß** sie als Intercalationsbestandteile mindestens eine intercalierbare Lewissäure, gegebenenfalls in Kombination mit dem (den) bei der Herstellung verwendeten Lösungsmittel(n) und mindestens eine organische Verbindung enthalten.

2. Graphit-Intercalationsverbindungen nach Anspruch 1, **dadurch gekennzeichnet, daß** sie als intercalierbare Lewissäure ein Metallhalogenid enthalten.

3. Graphit-Intercalationsverbindungen nach Anspruch 1 oder 2, **dadurch gekennzeichnet, daß** sie als intercalierbares Metallhalogenid ein Metallchlorid enthalten.

4. Graphit-Intercalationsverbindungen nach Anspruch 3, **dadurch gekennzeichnet, daß** sie als intercalierbares Metallchlorid AlCl₃, SbCl₅, ZnCl₂, YCl₃, CrCl₃, NiCl₂ und/oder FeCl₃ enthalten.

5. Graphit-Intercalationsverbindungen nach mindestens einem der Ansprüche 1 bis 4, **dadurch gekennzeichnet, daß** die organische Verbindung aus der Carbonsäurehalogenide, Dicarbonsäuredihalogenide, Alkylhalogenide, Arylhalogenide, Alkylarylhalogenide, Arylalkylhalogenide, aliphatische oder aromatische Alkohole, Dialkylether, Diarylether, Arylalkylether, aliphatische oder aromatische Glykolether, Carbonsäureester, Dicarbonsäureester, Alkene, 1,3-Diketone und organische Komplexbildner umfassenden Gruppe ausgewählt ist.

6. Graphit-Intercalationsverbindungen nach Anspruch 5, **dadurch gekennzeichnet, daß** sie als Carbonsäurehalogenid eine Verbindung der allgemeinen Formel (I) enthalten: 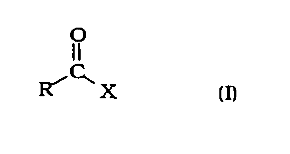 in der R Wasserstoff oder eine Alkylgruppe, Arylgruppe, Arylalkylgruppe oder Alkylarylgruppe mit 1 bis 30, vorzugsweise 1 bis 18 C-Atomen und X ein Halogenatom, vorzugsweise ein Chloratom oder ein Bromatom bedeuten.

7. Graphit-Intercalationsverbindungen nach Anspruch 5, **dadurch gekennzeichnet, daß** sie als Dicarbonsäuredihalogenid eine Verbindung der allgemeinen Formel (II) enthalten: 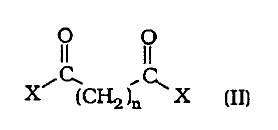 in der n eine ganze Zahl mit einem Wert von 1 bis 30, vorzugsweise 1 bis 18 und X ein Halogenatom, vorzugsweise ein Chloratom oder ein Bromatom bedeuten.

8. Graphit-Intercalationsverbindungen nach Anspruch 5 , **dadurch gekennzeichnet, daß** sie als Alkylhalogenid, Arylhalogenid, Arylalkylhalogenid oder Alkylarylhalogenid eine Verbindung der allgemeinen Formel (III) enthalten:
R-X (III)
in der R eine Alkyl-, Aryl-, Arylalkyl- oder Alkylarylgruppe mit 1 bis 30, vorzugsweise 1 bis 18 C-Atomen und X ein Halogenatom, vorzugsweise ein Chloratom oder ein Bromatom bedeuten.

9. Graphit-Intercalationsverbindungen nach Anspruch 5, **dadurch gekennzeichnet, daß** sie als aliphatischen oder aromatischen Alkohol eine Verbindung der allgemeinen Formel (IV) enthalten:
R-OH (IV)
in der R eine Alkyl-, Aryl-, Arylalkyl- oder Alkylarylgruppe mit 1 bis 30, vorzugsweise 1 bis 18 C-Atomen bedeutet.

10. Graphit-Intercalationsverbindungen nach Anspruch 5, **dadurch gekennzeichnet, daß** sie als Dialkylether, Diarylether oder Arylalkylether eine Verbindung der allgemeinen Formel (V) enthalten: 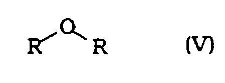 in der R unabhängig voneinander Alkyl-, Aryl-, Arylalkyl- oder Alkylarylgruppen mit 1 bis 30, vorzugsweise 1 bis 18 C-Atomen bedeuten.

11. Graphit-Intercalationsverbindungen nach Anspruch 5, **dadurch gekennzeichnet, daß** sie als aliphatischen oder aromatischen Glykolether eine Verbindung der allgemeinen Formel (VI) enthalten: 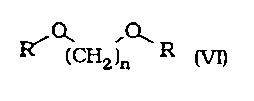 in der n eine ganze Zahl mit einem Wert von 1 bis 30, vorzugsweise 1 bis 18 und R unabhängig voneinander Alkyl-, Aryl-, Arylalkyl- oder Alkylarylgruppen mit 1 bis 30, vorzugsweise 1 bis 18 C-Atomen bedeuten.

12. Graphit-Intercalationsverbindungen nach Anspruch 5, **dadurch gekennzeichnet, daß** sie als Carbonsäureester eine Verbindung der allgemeinen Formel (VII) enthalten: 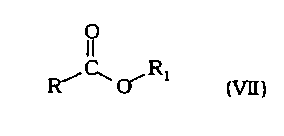 in der R Wasserstoff oder eine Alkyl-, Aryl-, Arylalkyl- oder Alkylarylgruppe mit 1 bis 30, vorzugsweise 1 bis 18 C-Atomen und R₁ eine Alkylgruppe mit 1 bis 8, vorzugsweise 1 bis 6 C-Atomen bedeuten.

13. Graphit-Intercalationsverbindungen nach Anspruch 5, **dadurch gekennzeichnet, daß** sie als Dicarbonsäureester eine Verbindung der allgemeinen Formel (VIII) enthalten: 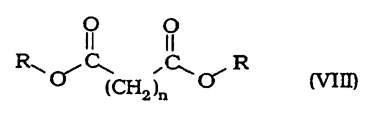 in der n eine ganze Zahl mit einem Wert von 1 bis 30, vorzugsweise 1 bis 18 und R unabhängig voneinander Alkyl-, Aryl-, Arylalkyl- oder Alkylarylgruppen mit 1 bis 30, vorzugsweise 1 bis 18 C-Atomen bedeuten.

14. Graphit-Intercalationsverbindungen nach Anspruch 5, **dadurch gekennzeichnet, daß** sie als Alken eine Verbindung der allgemeinen Formel (IX) enthalten: 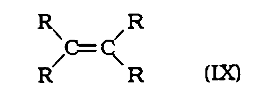 in der R unabhängig voneinander Wasserstoffatome, Alkyl-, Aryl-, Arylalkyl- oder Alkylarylgruppen mit 1 bis 30, vorzugsweise 1 bis 18 C-Atomen bedeuten.

15. Graphit-Intercalationsverbindungen nach Anspruch 5, **dadurch gekennzeichnet, daß** sie als 1,3-Diketon eine Verbindung der allgemeinen Formel (X) enthalten: 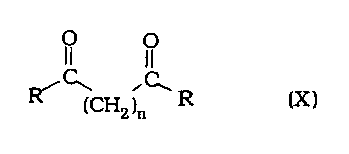 in der n eine ganze Zahl mit einem Wert von 1 bis 30, vorzugsweise 1 bis 18 und R unabhängig voneinander Alkyl-, Aryl-, Arylalkyl- oder Alkylarylgruppen mit 1 bis 30, vorzugsweise 1 bis 18 C-Atomen bedeuten.

16. Graphit-Intercalationsverbindungen nach Anspruch 5, **dadurch gekennzeichnet, daß** sie als organische Komplexbildner Ethylendiamintetraessigsäure, Nitrilitriessigsäure, Diethylentriaminpentaessigsäure, Nitrilomethanphosphonsäure, Pentanatriumtriphosphat und/oder Triethanolamin enthalten.

17. Verfahren zur Herstellung der Graphit-Intercalationsverbindungen nach den Ansprüchen 1 bis 16, **dadurch gekennzeichnet, daß** man Graphit und die intercalierbare Lewissäure im geschlossenen Rohr oder in einem dafür geeigneten Lösungsmittel umsetzt und dann die erhaltene Intercalationsverbindung aus Graphit und der Lewissäure, gegebenenfalls nach vorheriger Isolierung, Reinigung und Trocknung, mit der organischen Verbindung umsetzt und das Reaktionsprodukt isoliert, reinigt und trocknet.

18. Verfahren nach den Anspruch 17, **dadurch gekennzeichnet, daß** mandie in der ersten Stufe erhaltene Intercalationsverbindung aus Graphit und der Lewissäure mit der flüssigen oder geschmolzenen organischen Verbindung oder in einem dafür geeigneten Lösungsmittel umsetzt.

19. Verfahren zur Herstellung der Graphit-Intercalationsverbindungen nach den Ansprüchen 1 bis 16, **dadurch gekennzeichnet, daß** man Graphit, die intercalierbare Lewissäure und die organische Verbindung in der flüssigen oder geschmolzenen organischen Verbindung oder einem dafür geeigneten Lösungsmittel umsetzt und das Reaktionsprodukt isoliert, reinigt und trocknet.

20. Verfahren nach den Ansprüchen 17 bis 19, **dadurch gekennzeichnet, daß** man die Reinigung durch Waschen mit einem Lösungsmittel bewirkt.

21. Verfahren nach den Ansprüchen 17 bis 20, **dadurch gekennzeichnet, daß** man als Lösungsmittel ein Nitroalkan der allgemeinen Formel CH₃(CH₂)ₙNO₂, worin n eine ganze Zahl mit einem Wert von 0 bis 10 bedeutet, sowie deren Strukturisomere, insbesondere Nitromethan, Nitroethan, 1-Nitropropan, Tetrachlorkohlenstoff und/oder Thionylchlorid verwendet.

22. Verfahren nach einem der Ansprüche 17 bis 21, **dadurch gekennzeichnet, daß** man die Umsetzung bei eine Temperatur im Bereich von -10°C bis 100°C, vorzugsweise bei 10°C bis 50°C, während einer Zeitdauer von 3 Minuten bis 48 Stunden, vorzugsweise 5 bis 24 Stunden, bewirkt.

23. Verfahren nach einem der Ansprüche 17 bis 22, **dadurch gekennzeichnet, daß** man die Lewissäure in einer Menge von 0,02 bis 20 Mol, vorzugsweise 0,05 bis 10 Mol, pro Mol Graphit einsetzt.

24. Verfahren nach einem der Ansprüche 17 bis 23, **dadurch gekennzeichnet, daß** man die organische Verbindung in einer Menge von 0.75 bis 1000 Gew.-%, vorzugsweise 2 bis 800 Gew.-%, bezogen auf die Intercalationsverbindung aus Graphit und der Lewissäure und gegebenenfalls intercaliertem Nitromethan, einsetzt.

25. Verwendung der der Graphit-Intercalationsverbindungen nach den Ansprüchen 1 bis 16 als intumeszierendes Brandschutzadditiv für die Herstellung von Flammschutz-Zusammensetzungen.

## Claims

1. Expandable graphite intercalation compounds with a controllable onset temperature, **characterized in that** as intercalation components they contain at least one intercalatable Lewis acid, possibly combined with the solvent(s) used during the preparation, and at least one organic compound.

2. Graphite intercalation compounds according to Claim 1, **characterized in that** as intercalatable Lewis acid they contain a metal halide.

3. Graphite intercalation compounds according to Claim 1 or 2, **characterized in that** as intercalatable metal halide they contain a metal chloride.

4. Graphite intercalation compounds according to Claim 3, **characterized in that** as intercalatable metal chloride they contain AlCl₃, SbCl₅, ZinCl₂, YCl₃, CrCl₃, NiCl₂ and/or FeCl₃.

5. Graphite intercalation compounds according to at least one of Claims 1 to 4, **characterized in that** the organic compound is selected from the group consisting of carboxylic acid halides, dicarboxylic acid dihalides, alkyl halides, aryl halides, alkyl aryl halides, aryl alkyl halides, aliphatic or aromatic alcohols, dialkyl ethers, diaryl ethers, aryl alkyl ethers, aliphatic or aromatic glycol ethers, carboxylic acid esters, dicarboxylic acid esters, alkenes, 1,3-diketones and organic complexing agents.

6. Graphite intercalation compounds according to Claim 5, **characterized in that** as carboxylic acid halide they contain a compound of the general formula (I): 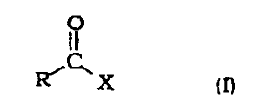 in which R denotes hydrogen or an alkyl group, aryl group, aryl alkyl group or alkyl aryl group with 1 to 30 and preferably 1 to 18 C-atoms, and X denotes a halogen atom, preferably a chorine atom or a bromine atom.

7. Graphite intercalation compounds according to Claim 5, **characterized in that** as dicarboxylic acid dihalide they contain a compound of the general formula (II): 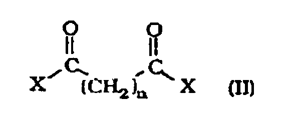 in which n denotes a whole number with a value of 1 to 30 and preferably 1 to 18, and X denotes a halogen atom, preferably a chorine atom or a bromine atom.

8. Graphite intercalation compounds according to Claim 5, **characterized in that** as alkyl halide, aryl halide, aryl alkyl halide or alkyl aryl halide they contain a compound of the general formula (III):
**R-X** (III)
in which R denotes an alkyl, aryl, aryl alkyl or alkyl aryl group with 1 to 30 and preferably 1 to 18 C-atoms, and X denotes a halogen atom, preferably a chorine atom or a bromine atom.

9. Graphite intercalation compounds according to Claim 5, **characterized in that** as aliphatic or aromatic alcohol they contain a compound of the general formula (IV):
**R-OH** (IV)
in which R denotes an alkyl, aryl, aryl alkyl or alkyl aryl group with 1 to 30 and preferably 1 to 18 C-atoms.

10. Graphite intercalation compounds according to Claim 5, **characterized in that** as dialkyl ether, diaryl ether or aryl alkyl ether they contain a compound of the general formula (V): 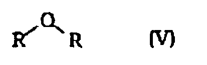 in which the Rs, independently of one another, denote alkyl, aryl, aryl alkyl or alkyl aryl groups with 1 to 30 and preferably 1 to 18 C-atoms.

11. Graphite intercalation compounds according to Claim 5, **characterized in that** as aliphatic or aromatic glycol ether they contain a compound of the general formula (VI): 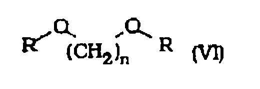 in which n denotes a whole number with a value of 1 to 30 and preferably 1 to 18, and R, independently of one another, denote alkyl, aryl, aryl alkyl or alkyl aryl groups with 1 to 30 and preferably 1 to 18 C-atoms.

12. Graphite intercalation compounds according to Claim 5, **characterized in that** as carboxylic acid ester they contain a compound of the general formula (VII): 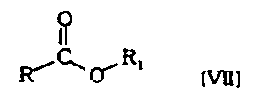 in which R denotes hydrogen or an alkyl, aryl, aryl alkyl or alkyl aryl group with 1 to 30 and preferably 1 to 18 C-atoms, and R₁ denotes an alkyl group with 1 to 8 and preferably 1 to 6 C-atoms.

13. Graphite intercalation compounds according to Claim 5, **characterized in that** as dicarboxylic acid ester they contain a compound of the general formula (VIII): 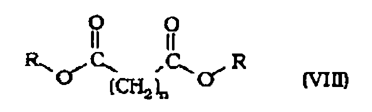 in which n denotes a whole number with a value of 1 to 30 and preferably 1 to 18, and Rs, independently of one another, denote alkyl, aryl, aryl alkyl or alkyl aryl groups with 1 to 30 and preferably 1 to 18 C-atoms.

14. Graphite intercalation compounds according to Claim 5, **characterized in that** as alkene they contain a compound of the general formula (IX): 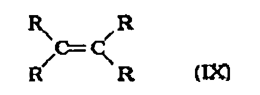 in which Rs, independently of one another, denote hydrogen atoms, alkyl, aryl, aryl alkyl or alkyl aryl groups with 1 to 30 and preferably 1 to 18 C-atoms.

15. Graphite intercalation compounds according to Claim 5, **characterized in that** as 1,3-diketone they contain a compound of the general formula (X): 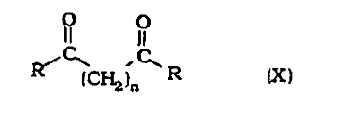 in which n denotes a whole number with a value of 1 to 30 and preferably 1 to 18, and R, independently of one another, denote alkyl, aryl, aryl alkyl or alkyl aryl groups with 1 to 30 and preferably 1 to 18 C-atoms.

16. Graphite intercalation compounds according to Claim 5, **characterized in that** as organic complexing agent they contain ethylene diamine tetra-acetic acid, nitrilotriacetic acid, diethylene triamine penta-acetic acid, nitrilomethane phosphonic acid, pentasodium triphosphate and/or triethanolamine.

17. Method of preparing the graphite intercalation compounds of Claims 1 to 16, **characterized in that** graphite and the intercalatable Lewis acid are reacted in the closed pipe or in a solvent suitable for the purpose, and the resulting intercalation compound of graphite and the Lewis acid, possibly after prior isolation, purification and drying, is then reacted with the organic compound and the reaction product is isolated, purified and dried.

18. Method according to Claim 17, **characterized in that** the intercalation compound of graphite and the Lewis acid obtained in the first step is reacted with the liquid or molten organic compound or in a solvent suitable for the purpose.

19. Method of preparing the graphite intercalation compounds of Claims 1 to 16, **characterized in that** graphite, the intercalatable Lewis acid and the organic compound are reacted in the liquid or molten organic compound or a solvent suitable for the purpose and the reaction product is isolated, purified and dried.

20. Method according to Claims 17 to 19, **characterized in that** the purification is carried out by washing with a solvent.

21. Method according to Claims 17 to 20, **characterized in that** a nitroalkane of the general formula CH₃(CH₂)ₙNO₂, in which n denotes a whole number with a value of 0 to 10, as well as its structural isomers, in particular nitromethane, nitroethane, 1-nitropropane, carbon tetrachloride and/or thionyl chloride, are used as solvent.

22. Method according to one of Claims 17 to 21, **characterized in that** the reaction is carried out at a temperature in the region of -10°C to 100°C, and preferably 10°C to 50°C for a period of 3 minutes to 48 hours and preferably 5 to 24 hours.

23. Method according to one of Claims 17 to 22, **characterized in that** the Lewis acid is used in an amount of 0.02 to 20 mol and preferably 0.05 to 10 mol per mol of graphite.

24. Method according to one of Claims 17 to 23, **characterized in that** the organic compound is used in an amount of 0.75 to 1000 % by weight, and preferably 2 to 800 % by weight, based on the intercalation compound of graphite and the Lewis acid and possibly intercalated nitromethane.

25. Use of the graphite intercalation compounds of Claims 1 to 16 as an intumescing fireproofing additive for the preparation of flameproofing compositions.

## Revendications

1. Composés d'intercalation du graphite expansibles avec une température de démarrage réglable, **caractérisés en ce qu'**ils contiennent au moins un acide de Lewis intercalable en tant que composant d'intercalation, éventuellement combiné au(x) solvant(s) que l'on utilise pour la préparation et au moins un composé organique.

2. Composés d'intercalation du graphite selon la revendication 1, **caractérisés en ce qu'**ils contiennent un halogénure métallique en tant qu'acide de Lewis intercalable.

3. Composés d'intercalation du graphite selon les revendications 1 ou 2, **caractérisés en ce qu'**ils contiennent un chlorure métallique en tant qu'halogénure métallique intercalable.

4. Composés d'intercalation du graphite selon la revendication 3, **caractérisés en ce qu'**ils contiennent AlCl₃, SbCl₅, ZnCl₂, YCl₃, CrCl₃, NiCl₂ et/ou FeCl₃ en tant que chlorure métallique intercalable.

5. Composés d'intercalation du graphite selon au moins l'une des revendications 1 à 4, **caractérisés en ce que** le composé organique est choisi dans le groupe comprenant des halogénures d'acide carboxylique, des dihalogénures d'acide dicarboxylique, des halogénures d'alkyle, des halogénures d'aryle, des halogénures d'alkylaryle, des halogénures d'arylalkyle, des alcools aliphatiques ou aromatiques, des éthers dialkyliques, des éthers diaryliques, des éthers arylalkyliques, des éthers de glycol aliphatiques ou aromatiques, des esters de type carboxylate, des esters de type dicarboxylate, des alcènes, des 1,3-dicétones et des agents complexants organiques.

6. Composés d'intercalation du graphite selon la revendication 5, **caractérisés en ce qu'**ils contiennent un composé de formule générale (I) 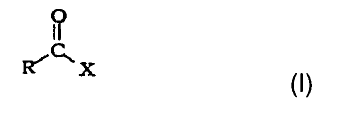 en tant qu'halogénure d'acide carboxylique, dans laquelle R est l'hydrogène ou un groupe alkyle, un groupe aryle, un groupe arylalkyle ou un groupe alkylaryle ayant 1 à 30, de préférence 1 à 18 atomes de carbone et X représente un atome d'halogène, de préférence un atome de chlore ou un atome de brome.

7. Composés d'intercalation du graphite selon la revendication 5, **caractérisés en ce qu'**ils contiennent un composé de formule générale (II) 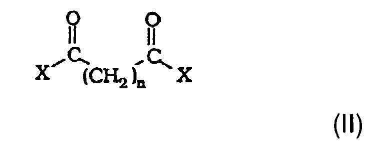 en tant que dihalogénure d'acide dicarboxylique, dans laquelle n représente un nombre entier valant 1 à 30, de préférence 1 à 18 et X représente un atome d'halogène, de préférence un atome de chlore ou un atome de brome.

8. Composés d'intercalation du graphite selon la revendication 5,
**caractérisés en ce qu'**ils contiennent un composé de formule générale (III)
R-X (III)
en tant qu'halogénure d'alkyle, qu'halogénure d'aryle, qu'halogénure d'arylalkyle ou qu'halogénure d'alkylaryle, dans laquelle R représente un groupe alkyle, aryle, arylalkyle ou alkylaryle ayant 1 à 30, de préférence 1 à 18 atomes de carbone et X représente un atome d'halogène, de préférence un atome de chlore ou un atome de brome.

9. Composés d'intercalation du graphite selon la revendication 5, **caractérisés en ce qu'**ils contiennent un composé de formule générale (IV)
R-OH (IV)
en tant qu'alcool aliphatique ou aromatique, dans laquelle R représente un groupe alkyle, aryle, arylalkyle ou alkylaryle ayant 1 à 30, de préférence 1 à 18 atomes de carbone.

10. Composés d'intercalation du graphite selon la revendication 5, **caractérisés en ce qu'**ils contiennent un composé de formule générale (V) 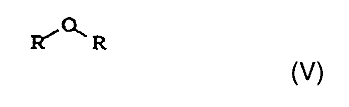 en tant qu'éther dialkylique, qu'éther diarylique ou qu'éther arylalkylique, dans laquelle les radicaux R, indépendamment l'un de l'autre, représentent un groupe alkyle, aryle, arylalkyle ou alkylaryle ayant 1 à 30, de préférence 1 à 18 atomes de carbone.

11. Composés d'intercalation du graphite selon la revendication 5, **caractérisés en ce qu'**ils contiennent un composé de formule générale (VI) 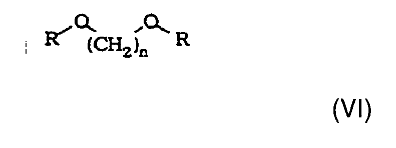 en tant qu'éther de glycol aliphatique ou aromatique, dans laquelle n est un nombre entier valant 1 à 30, de préférence 1 à 18 et les radicaux R, indépendamment l'un de l'autre, représentent un groupe alkyle, aryle, arylalkyle ou alkylaryle ayant 1 à 30, de préférence 1 à 18 atomes de carbone.

12. Composés d'intercalation du graphite selon la revendication 5, **caractérisés en ce qu'**ils contiennent un composé de formule générale (VII) 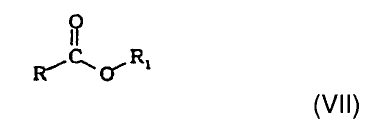 en tant qu'ester de type carboxylate, dans laquelle R représente l'hydrogène ou un groupe alkyle, aryle, arylalkyle ou alkylaryle ayant 1 à 30, de préférence 1 à 18 atomes de carbone et R₁ représente un groupe alkyle ayant 1 à 8, de préférence 1 à 6 atomes de carbone.

13. Composés d'intercalation du graphite selon la revendication 5, **caractérisés en ce qu'**ils contiennent un composé de formule générale (VIII) 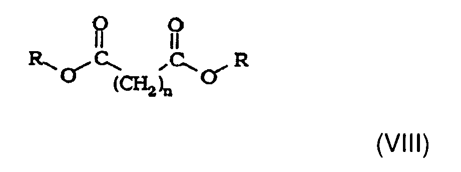 en tant qu'ester de type dicarboxylate, dans laquelle n représente un nombre entier valant 1 à 30, de préférence 1 à 18 et les radicaux R, indépendamment l'un de l'autre, représentent un groupe alkyle, aryle, arylalkyle ou alkylaryle ayant 1 à 30, de préférence 1 à 18 atomes de carbone.

14. Composés d'intercalation du graphite selon la revendication 5, **caractérisés en ce qu'**ils contiennent un composé de formule générale (IX) 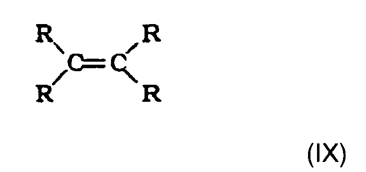 en tant qu'alcène, dans laquelle les radicaux R, indépendamment les uns des autres, représentent des atomes d'hydrogène, un groupe alkyle, aryle, arylalkyle ou alkylaryle ayant 1 à 30, de préférence 1 à 18 atomes de carbone.

15. Composés d'intercalation du graphite selon la revendication 5, **caractérisés en ce qu'**ils contiennent un composé de formule générale (X) 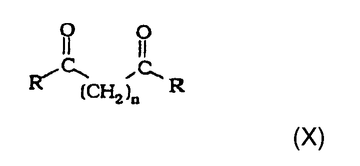 en tant que 1,3-dicétone, dans laquelle n est un nombre entier valant 1 à 30, de préférence 1 à 18 et les radicaux R, indépendamment l'un de l'autre, représentent un groupe alkyle, aryle, arylalkyle ou alkylaryle ayant 1 à 30, de préférence 1 à 18 atomes de carbone.

16. Composés d'intercalation du graphite selon la revendication 5, **caractérisés en ce qu'**ils contiennent de l'acide éthylènediaminetétraacétique, de l'acide nitrilotriacétique, de l'acide diéthylènetriaminepentaacétique, de l'acide nitrilométhanephosphonique, du triphosphate pentasodique et/ou de la triéthanolamine en tant qu'agent complexant organique.

17. Procédé pour la préparation de composés d'intercalation du graphite selon les revendications 1 à 16, **caractérisé en ce qu'**on fait réagir le graphite et l'acide de Lewis intercalable dans un tube fermé ou dans un solvant adapté puis on fait réagir le composé du graphite et de l'acide de Lewis ainsi obtenu, éventuellement après isolement, purification et séchage préalables, avec le composé organique et **en ce qu'**on isole, purifie et sèche le produit réactionnel.

18. Procédé selon la revendication 17, **caractérisé en ce qu'**on fait réagir le composé d'intercalation du graphite et de l'acide de Lewis obtenu à la première étape avec le composé organique liquide ou fondu ou bien dans un solvant adapté.

19. Procédé pour préparer des composés d'intercalation du graphite selon les revendications 1 à 16, **caractérisé en ce qu'**on fait réagir le graphite, l'acide de Lewis intercalable et le composé organique dans le composé organique liquide ou fondu ou bien dans un solvant adapté et **en ce qu'**on isole, purifie et sèche le produit réactionnel.

20. Procédé selon les revendications 17 à 19, **caractérisé en ce qu'**on procède à la purification par lavage avec un solvant.

21. Procédé selon les revendications 17 à 20, **caractérisé en ce qu'**on utilise comme solvant un nitroalcane de formule générale CH₃(CH₂)ₙNO₂, dans laquelle n est un nombre entier valant 0 à 10 ainsi que ses isomères structuraux, notamment le nitrométhane, le nitroéthane, le 1-nitropropane, le tétrachlorure de carbone et/ou le chlorure de thionyle.

22. Procédé selon l'une des revendications 17 à 21, **caractérisé en ce qu'**on effectue la réaction à une température située dans la fourchette de -10 °C à 100 °C, de préférence de 10 °C à 50 °C pendant 3 minutes à 48 heures, de préférence, pendant 5 minutes à 24 heures.

23. Procédé selon l'une des revendications 17 à 22, **caractérisé en ce qu'**on utilise l'acide de Lewis dans une quantité allant de 0,02 à 20 moles, de préférence de 0,05 à 10 moles par mole de graphite.

24. Procédé selon l'une des revendications 17 à 23, **caractérisé en ce qu'**on utilise le composé organique dans une quantité allant de 0,75 à 1000 % en poids, de préférence de 2 à 800 % en poids, basé sur le composé d'intercalation du graphite et de l'acide de Lewis et éventuellement du nitrométhane intercalé.

25. Utilisation des composés d'intercalation du graphite selon les revendications 1 à 16 en tant qu'additif ignifuge intumescent pour produire des compositions ignifuges.
